# EUROPÄISCHE PATENTANMELDUNG

(11) **EP 1 489 832 A1**
(43) Veröffentlichungstag der Anmeldung: **22.12.2004**
(21) Anmeldenummer: 03101780.9
(22) Anmeldetag: 18.06.2003
(51) Int. Cl.: H04N 1/62

(54) **Verfahren zum automatischen Korrigieren von Hautfarben in digitalen Bilddaten**

(71) Anmelder: Agfa-Gevaert AG, 51373 Leverkusen (DE)
(72) Erfinder: Wolff, Ulrike, 80335, München (DE); König, Friedhelm, 81669, München (DE)

(57) **Zusammenfassung**

Die Erfindung betrifft ein Verfahren zum automatischen Korrigieren von Hautfarben in digitalen Bilddaten. Hierbei werden Bildpunkte von Hautpartien in Bildern als Hautpunkte identifiziert, so dass deren Farbton verändert werden kann. Die Korrektur der Hautpunkte erfolgt, indem der Farbton dieser Punkte im Farbraum in Richtung einer vorbestimmten, zusammenhängenden, idealen Hautfarbmenge abgebildet wird.

## Beschreibung

Die Erfindung betrifft ein Verfahren zum automatischen Korrigieren von Hautfarben in digitalen Bilddaten nach dem Oberbegriff von Anspruch 1.

Bilder, insbesondere von Personenaufnahmen, werden vom Betrachter in der Regel als schön bzw. stimmig empfunden, wenn die Gesichts- und andere Hautpartien in einem als angenehm empfundenen Hautton wiedergegeben werden. Beim positiven Erscheinungsbild einer Hautfarbe spielen in der Regel nicht so sehr die tatsächlich bei einer Aufnahme vorherrschenden Farbtöne, welche sich auf Grund der Licht- und Umgebungsverhältnisse ergeben, eine Rolle, sondern vielmehr sogenannte Erinnerungsfarben, das heißt die Farbtöne, die sich beim Betrachter als für einen Hautton stimmig und schön eingeprägt haben bzw. die sich aus seinem Farbempfinden ergeben. Diese Erinnerungsfarben bestimmen sich oftmals nach der Prägung, die der Geschmack des Betrachters in seinem Umfeld erfahren hat. So gilt im europäischen Raum beispielsweise ein leicht gebräunter eher rötlicher Teint als schön. Das hat zur Folge, dass ein Gesicht und damit das Bild das dieses Gesicht aufweist, als schön empfunden wird, wenn das Gesicht einen derartigen Farbton hat. Im asiatischen Raum ist dagegen sehr wichtig, dass die Gesichtsfarbe bzw. Hautfarbe auf keinen Fall gelblich erscheint. Ein gelber Teint wird in diesen Ländern als äußerst unangenehm empfunden, Bilder die mit gelblichen Hauttönen wiedergegeben werden lehnen Kunden oftmals ab. Um die Kundenzufriedenheit und damit den Verkaufswert von Bildern, insbesondere im fotografischen Bereich, zu steigern, ist es natürlich wünschenswert, die auf den Bildern enthaltenen Hauttöne so angenehm wie möglich für den Betrachter wiederzugeben. Aus diesem Grund wurden Verfahren entwickelt, welche sich mit der Veränderung von Hauttönen, im Rahmen der Bearbeitung digitaler Bilder, befassen.

In der US 2002105662 ist ein Verfahren beschrieben, bei dem die Farbe bestimmter Anteile des Bildinhalts, insbesondere der aufgenommenen Gesichter, gezielt verändert wird. Eine in dieser Schrift vorgeschlagene Möglichkeit zur Wahl der gewünschten Gesichtsfarbe besteht darin, dass ein Kamerabenutzer bereits bei der Aufnahme eines Bildes den gewünschten Hautton festlegt, den die Gesichter im Bild bei der Wiedergabe aufweisen sollen. Die Kamera fügt dann dem Bilddatensatz eine Information darüber hinzu, ob der Hautton in beispielweise asiatischer, orientalischer oder schwarzer Tönung gewünscht wird. Eine weitere hier offenbarte Möglichkeit zur Auswahl eines vorteilhaften Hauttons der im Bild aufgenommenen Personen besteht darin, dass das aufgenommene Bild am Bildschirm eines Bildbearbeitungsgeräts mehrfach dargestellt wird, wobei die einzelnen Bilder unterschiedliche Hauttonvarianten zeigen. Der Benutzer kann dann unter den dargestellten zur Wahl stehenden Hauttonfarben die auswählen, welche seinem Geschmack nach am besten zu der Person passt. Diesen zwei vorgeschlagenen Hauttonkorrekturverfahren ist gemeinsam, dass der Benutzer den Hautton seiner Wahl manuell festlegen muss, wobei die Auswahl des gewünschten Hauttons vorzugsweise passend zur aufgenommenen Person erfolgt. Die zur Verfügung stehenden veränderten Hauttonfarben werden erzeugt, indem die ursprüngliche Hauttonfarbe in Richtung einer der Primärfarben, vorzugsweise ins Blaue, verschoben wird oder indem alle Farbanteile der Hautfarbe gleichermaßen reduziert werden. Nachteilig an dem Verfahren ist, dass der Benutzer manuell einen passenden Hautton wählen muss, so dass diese Verfahren im Rahmen einer automatischen Bildbearbeitung nicht anwendbar sind. Ferner führt die Korrektur der Hauttonfarbe durch Verschieben in Primärfarbrichtungen oftmals zu einem Ergebnis, das einen sehr künstlichen und damit unbefriedigenden Eindruck der Hautfarbe hinterläßt, während eine Farbreduktion nur eine blassere Hautfarbe zur Folge hat.

Aufgabe der Erfindung war es deshalb, ein Verfahren zur Korrektur von Hautfarben in digitalen Bilddaten zu entwickeln, welches automatisch erfolgt, ohne dass das Eingreifen eines Benutzers erforderlich ist und das dabei zufriedenstellende Hautfarben erzeugt.

Gelöst wird diese Aufgabe gemäß der Erfindung durch ein Verfahren mit den Merkmalen von Anspruch 1. Weitere vorteilhafte Ausführungsformen sind Bestandteil der Unteransprüche im Zusammenhang mit der Beschreibung und den Zeichnungen.

Erfindungsgemäß werden in den digitalen Bilddaten die Farbwerte der Bildpunkte, welche als Hautpunkte ermittelt wurden automatisch korrigiert, indem diese Farbwerte so verändert werden, dass sie im Farbraum in Richtung einer vorbestimmten zusammenhängenden idealen Hautfarbmenge versetzt werden. Die Farbe des Hautpunktes wird gewissermaßen in Richtung dieser idealen Hautfarbmenge gezogen. Die ideale Hautfarbmenge ist eine Menge von Punkten im Farbraum, deren Farbton vom Betrachter als angenehme, schöne Hautfarbe empfunden wird. Bildpunkte die Farben aufweisen, welche Elemente dieser idealen Hautfarbmenge sind, bleiben bei dieser Hautfarbkorrektur unverändert. Alle anderen als hautfarbenen ermittelten Bilddaten werden in Richtung dieser idealen Hautfarbmenge abgebildet. Die ideale Hautfarbmenge wird vorbestimmt und für das Korrekturverfahren vorabgelegt. Dies kann beispielsweise im Rahmen einer dreidimensionalen Look-Up-Table (LUT) erfolgen, es ist aber auch mögliche sie als 1d-Kennlinie o. Ä. zu speichern. Bestimmt wird die ideale Hautfarbmenge indem eine große Anzahl von Bildern möglichst von einer großen Anzahl von Personen ausgewertet wird und dabei die als angenehm empfundenen Hautfarben ermittelt werden. Die Bestimmung einer derartigen Hautfarbmenge kann aber auch über ein neuronales Netz erfolgen. Bei der Bestimmung dieser Hautfarbmenge ist wichtig, dass viele verschiedene Bildinhalte und viele verschiedene Betrachter bei der Auswahl berücksichtigt werden, so dass gewissermaßen eine aussagefähige Statistik erreicht wird. Die idealen Hautfarbpunkte stellen vorteilhafterweise im Farbraum eine zusammenhängende Menge dar, so dass vermieden wird, dass in den korrigierten Bilddaten Farbsprünge auftreten. Hierdurch wird verhindert, dass zwei in den Ausgangsbilddaten im Farbraum benachbarte Farbpunkte, welche auch im Bild nebeneinander liegen, im korrigierten Bild stark unterschiedliche Farbwerte haben. Sanfte Farbübergänge bleiben somit auch im korrigierten Bild erhalten. Besonders vorteilhaft an diesem Verfahren, bei dem Hautfarben in Richtung einer vordefinierten Hautfarbmenge abgebildet werden, ist, dass dieses Verfahren unabhängig vom Benutzer, Bildinhalt oder sonstigem auf alle digitalen Bilder gleichermaßen angewandt werden kann. In den digitalen Bilddaten müssen lediglich die Hautpunkte identifiziert werden. Sobald diese Hautpunkte identifiziert sind wird lediglich ihr Farbwert in einer vorbestimmten Transformation auf einen anderen Farbwert abgebildet. Damit kann dieses Verfahren automatisch bei allen Bildern, welche Personenaufnahmen enthalten, eingesetzt werden, ohne dass ein Bediener bei Bildaufnahme oder Korrektur manuell eingreifen müsste. Auch die Bestimmung der idealen Hautfarbmenge kann mit sehr großem Aufwand und damit sehr exakt erfolgen, da diese nur einmalig bestimmt werden muss und für alle folgenden Korrekturen immer wieder verwendbar ist. Besonders vorteilhaft an diesem Verfahren ist ferner, dass die Hauttöne nicht auf eine bestimmte einheitliche Farbe abgebildet werden, sondern nur in eine bestimmte Richtung modifiziert werden. Dadurch wird vermieden, dass nach der Korrektur alle digitalen Bilder denselben, im Allgemeinen dann eher künstlich wirkenden, Hautfarbwert einnehmen, die Farbunterschiede und damit bildspezifischen Farberscheinungen bleiben weitgehend erhalten, sie werden nur leicht im Farbton in Richtung einer angenehmer empfundenen Farbe modifiziert.

Vorteilhafterweise wird die Veränderung der Farbtöne der Hautpunkte als Verschiebung proportional zum Abstand des zu korrigierenden Farbtons von der idealen Hautfarbmenge im Farbraum vorgenommen. Je weiter der zu korrigierende Hautpunkt in seiner Farbe von der als ideal empfundenen Hautfarbe abweicht, um so stärker wird er also in Richtung der Zielmenge verschoben. Dadurch ist gewährleistet, dass Hauttöne, welche bereits als verhältnismäßig angenehm empfunden werden, welche also nahe der idealen Hautfarbmenge liegen, nur wenig verändert werden, während von dieser Idealfarbe stark abweichende Hautfarben deutlich stärker beeinflusst werden. Die Einflussnahme auf die Farbe der Originaldaten ist damit stärker, je schlechter der ursprüngliche Eindruck ist. Damit wird gewährleistet, dass die künstliche Einflussnahme nur dort stark ist, wo es auch wirklich notwendig ist, während bereits gute Bilder kaum verändert werden.

Vorteilhafterweise werden die Farbwerte von Bildpunkten, die als Hautfarben erkannt wurden, aber in ihrem Farbton nahe der Grauachse im Farbraum liegen, nicht oder nur sehr wenig verändert. Hierdurch wird sichergestellt, dass neutral-graue Punkte des Originals in dem bearbeiteten, wiederzugebenden Abbild weiterhin grau erscheinen. Würde man an diesen Punkten eine Hauttonkorrektur vornehmen, so bestünde die Gefahr, dass das Bild farbstichig erscheint. Durch die Ausnahme solcher Punkte von der Hauttonkorrektur wird erreicht, dass neutralgraue Bereiche erhalten bleiben.

In einer vorteilhaften Ausführungsform des Verfahrens werden die zu korrigierenden Bildpunkte, welche Farbwerte von Hautfarben aufweisen identifiziert, indem ihre Farbwerte mit den Farbwerten vorbestimmter Hautfarben verglichen werden. Liegen die Farbwerte in einem bestimmten Farbbereich, so werden die Bildpunkte als Hautpunkte gekennzeichnet und korrigiert. Durch dieses Verfahren ist gewährleistet, dass nicht nur Gesichter als zu korrigierende Hautpartien gekennzeichnet werden, sondern dass prinzipiell alle im Bild auftretenden Hautpartien der Hauttonkorrektur unterzogen werden. Allerdings kann es bei diesem Vorgehen geschehen, dass Bildpunkte von Objekten, welche keine Hautbereiche aufweisen, korrigiert werden, da in diesen Objekten auch Bildpunkte mit hautfarbigen Farbwerten auftreten. Hierdurch kann es zu unerwünschten Farbverfälschungen dieser Objekte kommen. Ferner ist möglich, dass bei farbstichigen Bildern Hauttöne nicht erkannt und deshalb nicht korrigiert werden, da die Farben generell verschoben sind.

Aus diesem Grund ist es vorteilhafter, die anhand ihrer Hautfarbe als mögliche Hautpunkte gekennzeichneten Bildpunkte, anhand eines weiteren Überprüfungskriteriums zu verifzieren. Hier können besonders vorteilhaft sogenannte Gesichtserkennungsverfahren eingesetzt werden. Derartige Verfahren sind beispielsweise aus dem Bereich der Rote- Augen-Korrektur bekannt. Beispiele für derartige Verfahren sind in der EP 1 293 933 A1 beschrieben. Einige der bekannten Gesichtserkennungsverfahren arbeiten mit Beispielgesichtern, welche mit im Bild vorhandenen Objekten verglichen werden. Andere arbeiten mit verformbaren Gittern, welche Gitterknotenpunkte mit Punkten, welche für Gesichter markant sind, wie Augen Mund und Nase, in Übereinstimmung bringen. Wieder andere Gesichtserkennungsverfahren arbeiten mit Eigenvektoren des Graustufenbildes, welche mit den Eigenvektoren eines Gesichtes übereinstimmen müssen. Denkbar wäre aber auch, dass zur Verifikation der Hauttöne einfach die Form oder Größe oder die Umgebung eines möglichen Gesichts herangezogen würden. Der Vorteil eines derartigen Verfahrens ist, dass es weniger aufwändig und rechenzeitintensiv ist, allerdings ist es unter Umständen nicht so genau wie eines der aus den Objekterkennungsverfahren entnommenen Gesichtserkennungsverfahren. Nachteilig an der Verifikation der Hautpunkte mit Gesichtserkennungsverfahren ist, dass dabei nur Hauttöne von tatsächlichen Gesichtern identifiziert werden. Die Hauttöne von Armen und Beinen oder sonstigen Körperteilen können hierbei nicht ermittelt werden. Hier lassen sich allerdings Verfahren anwenden, welche nachdem erst einmal ein Gesicht gefunden wurde durch Lage, Größe und Form der übrigen hauttonfarbenen Bildbereiche anhand von Kausalitätsüberlegungen zu einem Körper zugehörige Hautpartien zuweisen. Gesichtserkennungsverfahren können auch generell zur Identifizierung von Hautpartien eingesetzt werden. Weitere Hautbereiche können dann identifiziert werden, indem Bereiche gleicher Farbe mit den Gesichtern gesucht werden.

Um zu vermeiden, dass im korrigierten Bild bei Farben, welche sehr ähnlich zu Hauttönen sind, Farbsprünge auftreten, werden vorteilhafterweise Farbtöne von Bildpunkten, welche im Farbraum nahe der zu korrigierenden Hautpunkte liegen, ebenfalls in Richtung der idealen Hautfarbmenge verändert. Da es sich hierbei aber nur um ein Angleichen, nicht um eine eigentliche Hauttonkorrektur handeln soll, wird die Veränderung moderater vorgenommen. So kann beispielsweise der Verschiebungsfaktor geringer gewählt werden. Er kann aber auch mit zunehmendem Abstand von den eigentlich zu korrigierenden Punkten abfallend gewählt werden.

Die Verschiebung bzw. Veränderung der Farbwerte von Hautpunkten und deren direkter Umgebung im Farbraum in Richtung der idealen Hautfarbmenge erfolgt in einer Ebene senkrecht zur Grauachse. Hierdurch ist gewährleistet, dass bei der Farbveränderung der Hautpunkte deren Helligkeit erhalten bleibt.

Vorteilhafterweise wird die Hautfarbenkorrektur auf die Bilddaten erst nach allen anderen Bildbearbeitungsschritten angewandt, welche ebenfalls die Farbwerte der Bilddaten verändern. Insbesondere die Gradationskorrektur, welche Dichteumfang und Kontrast des Bildes festlegt, wobei auch die Farbwerte der Bilddaten beeinflusst werden, wird vor der Hautfarbenkorrektur ausgeführt. Auch Farbstichkorrekturen oder kundenspezifisch gewählte Farbkorrekturen werden vorteilhafterweise durchgeführt, bevor Hauttöne identifiziert und korrigiert werden. Durch das Einhalten dieser Reihenfolge wird gewährleistet, dass am Ende des gesamten Bildbearbeitungsprozesses die korrigierten Hautpartien auch tatsächlich die gewünschten Hautfarben aufweisen. Würde man dagegen nach der Hautfarbenkorrektur noch weitere Farbkorrekturen anschließen, so könnten die Hautfarben erneut verfälscht werden.

Die ideale Hautfarbmenge besteht vorteilhafterweise aus einer Hauttonlinie, insbesondere Hauttongerade, im dreidimensionalen Farbraum. Indem eine Gerade als ideale Hautfarbmenge definiert wird, ist gewährleistet, dass die Hauttonmenge zusammenhängend ist und dass in jeder Helligkeitsstufe nur genau ein idealer Hautton existiert, in dessen Richtung abgebildet wird. Hierdurch können Farbsprünge im korrigierten Bild vermieden werden und eindeutige Zuweisungen sind gewährleistet.

Die Hauttongerade verläuft vorteilhafterweise parallel zur ebenfalls im Farbraum festgelegten Grauachse, auf der alle als ideale Grauwerte definierten Farbwerte festgehalten sind. Durch diese Parallelität und durch eine Abbildung senkrecht zur Grauachse ist sichergestellt, dass bei der Veränderung der Farbwerte der Hauttöne die Helligkeit der Punkte erhalten bleibt.

Eine besonders vorteilhafte Ausführungsform des Verfahrens sieht vor, mehrere unterschiedliche Hautfarbmengen für unterschiedliche Geschmacksrichtungen anzubieten. So kann je nach Landesgeschmack oder individuellen Geschmack vom Benutzer seine bevorzugte ideale Hautfarbmenge gewählt werden, nach der dann die Korrektur vorgenommen wird. Hierdurch kann unterschiedlichen Geschmacksrichtungen besser Rechnung getragen werden.

Weitere Einzelheiten und Vorteile der Erfindung ergeben sich aus den Unteransprüchen im Zusammenhang mit der Beschreibung eines Ausführungsbeispiels, das anhand der Zeichnung eingehend erläutert wird.

Es zeigen:
- Fig. 1: ein Ablaufschema eines Bildbearbeitungsverfahrens, in welches das erfindungsgemäße Hautfarbkorrekturverfahren integriert ist,
- Fig. 2: eine dreidimensionale Farbtabelle, anhand der das erfindungsgemäße Verfahren erläutert wird und
- Fig. 3: die Farbtabelle aus Fig. 2, aber in einer Richtung gesehen, die mit dem Verlauf der Hauttongerade übereinstimmt.

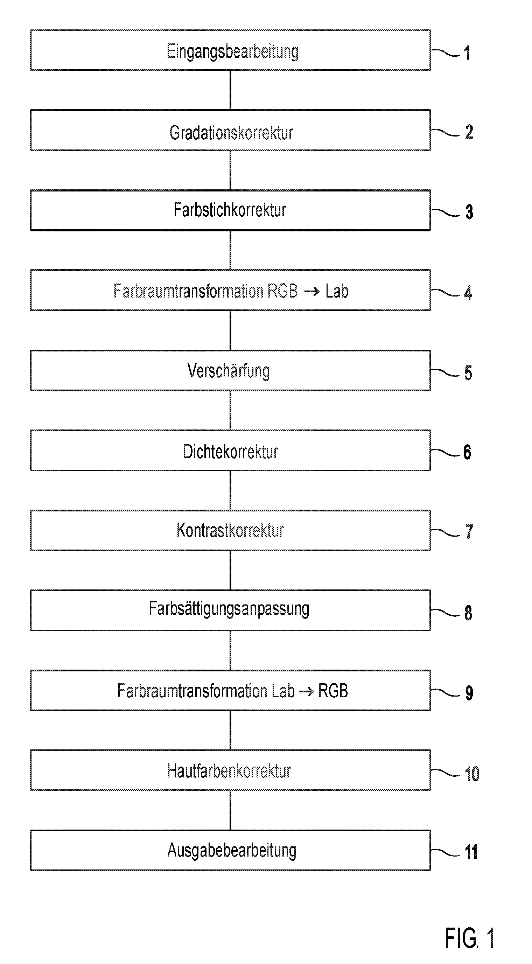

Fig. 1 zeigt schematisch die Schritte, die bei der Bearbeitung digitaler Bilddaten, insbesondere von fotografischen Bildern, im Allgemeinen vorgenommen werden. Dabei ist es unwesentlich, aus welcher Quelle die Daten stammen. So kann es sich um Daten von herkömmlichen Fotografien auf Negativfilmen, welche eingescannt wurden, ebenso handeln, wie um Bilder, welche mit digitalen Kameras oder Handys aufgenommen wurden oder sogar um Graphiken, welche am Computer erzeugt wurden. Die unterschiedliche Datenherkunft betimmt, im Rahmen der Bildbearbeitung, die Art der vorgenommenen Eingangsbearbeitung, welche in einem Bildbearbeitungsschritt 1 vorgenommen wird. So ist es bei Bildern, welche von eingescannten Negativfilmen stammen, im Allgemeinen vorteilhaft eine Scannerkorrektur und eventuell eine Kratzerkorrektur vorzunehmen. Bilder von digitalen Kameras werden dagegen in der Regel komprimiert abgespeichert und so an die Bildbearbeitung übertragen, so dass in der Eingangsbearbeitung 1 als erstes eine Dekomprimierung erfolgt. Derartige Eingangsbearbeitungen sind im Bereich der digitalen Bildbearbeitung, insbesondere mittels fotografischer Kopiergeräte, aber auch von Bildbearbeitungsprogrammen, wie beispielsweise Adobe Photoshop hinreichend bekannt.

Die folgenden Bildbearbeitungsschritte betreffen die Farb- und Dichtekorrektur der zu bearbeitenden Bilddaten. So wird in einem Bildbearbeitungsschritt 2 eine Gradationskorrektur der Bilddaten vorgenommen. Im Rahmen der Gradationskorrektur werden Bilddichte und Bildkontrast für die Bilddaten des zu bearbeitenden Bildes festgelegt. Diese Korrektur erfolgt in bekannter Weise, im Allgemeinen mittels sogenannter Look-Up-Tables (LUT), in denen Kennlinien gespeichert sind. Durch die Veränderung von Dichte und Kontrast verändert sich im Rahmen der Gradationskorrektur auch die Lage der Punkte im Farbraum. Aus diesem Grund ist es sinnvoll, diese Korrektur, sowie die folgenden, farbverändernden Maßnahmen vor Korrekturen durchzuführen, welche auf der Identifizierung bestimmter Farben basieren, wie dies beispielsweise bei der erfindungsgemäßen Hautfarbenkorrektur der Fall ist. Um Hautfarben zu korrigieren werden notwendigerweise die Hautbereiche in den Bilddaten ermittelt. Hierzu können als hautfarben definierte Gebiete im Farbraum verwendet werden, innerhalb derer die Farbwerte der gesuchten Hautpunkte liegen müssen. Diese Identifizierung sollte jedoch erst erfolgen, wenn die Farbwerte des korrigierten Bildes endgültig festliegen, da jede farbverändernde Korrektur Farbwerte der Bildpunkte in die Hauttongebiete verschieben kann oder auch aus diesen entfernen. In einem weiteren Bildbearbeitungsschritt 3 e r-folgt eine Farbstichkorrektur. Bei dieser Korrektur wird ein im Bild ermittelter Farbstich korrigiert, indem ebenfalls eine Kennlinie auf die Bilddaten angewandt wird. Die für Gradationskorrektur und Farbstichkorrektur notwendigen Informationen, über die Ursprungsdichten und ursprünglichen Farbwerte des zu bearbeitenden Bildes, werden zumeist vorher aus der Analyse des zu korrigierenden Bildes oder auch mehrerer Bilder gleichen Aufnahmetyps, d. h. Bilder vom selben Film, aus derselben digitalen Kamera oder aus demselben Auftrag, gewonnen. An diese, die Farbwerte der Bilddaten beeinflussenden Korrekturen, schließt sich nun in einem Bildbearbeitungsschritt 4 eine Farbraumtransformation vom RGB-Farbraum in den Lab-Farbraum an. Für die folgenden Bearbeitungsschritte ist der Lab-Farbraum geeignet, da innerhalb dieser lediglich eine Veränderung des Helligkeitssignals, nicht aber der Farbwerte vorgesehen ist. Deshalb ist es für diese Bearbeitungsschritte vorteilhafter, auf den Lab-Farbraum umzusteigen, welcher aus einem Luminanzsignal L und zwei Chrominanzsignalen a und b besteht, wobei der Chrominanzwert a die rot-grün-Färbung verkörpert, der Chrominanzwert b dagegen den blau-gelb-Anteil der Bilddaten.

Auf das Luminanzsignal wird nun in einem Bildbearbeitungsschritt 5 die sogenannte Verschärfung angewandt. Hierbei werden die höheren Frequenzen der Bilddaten, welche für Bildkanten stehen, angehoben, um den Schärfeeindruck des Bildes zu verbessern. An die Bildverschärfung schließt sich in einem Bildbearbeitungsschritt 6 eine weitere Dichtekorrektur an, in der die Bilddichte im Luminanzsignal, beispielsweise nach kundenspezifisch gestalteten Vorgaben, verändert wird. In einem Bildbearbeitungsschritt 7 werden die tiefen Frequenzen des Luminanzsignals, mittels der sogenannten unscharfen Maskierung, bearbeitet. Dieser Bildbearbeitungsschritt verändert den Großflächenkontrast des Bildes mittels einer Filterung des tiefen Frequenzsignals. Hierdurch können lokal überbelichtete Bereiche abgedunkelt oder im Schatten liegende zu dunkle Bildbereiche aufgehellt werden. Auch diese Verfahren sind in der heutigen Bildbearbeitung gängig. Da durch diese Verfahren die Farbwerte der Bilddaten nicht verändert werden, könnten sie unter Umständen auch nach farbtonidentifizierenden Bildbearbeitungsverfahren, wie der Hautfarbenkorrektur, angewandt werden. Da eine Veränderung des Luminanzsignals sich aber unter Umständen auch bei Beibehaltung der Chrominanzsignale auf die Lage der Bildpunkte im Farbraum auswirken kann, ist es dennoch sinnvoller auch diese Bildbearbeitungsschritte vor der Hautfarbenkorrektur vorzunehmen. Allerdings ist die Reihenfolge der einzelnen Bildbearbeitungsschritte, welche vorteilhafterweise vor der Hautfarbenkorrektur vorzunehmen sind, frei wählbar. Sie ist prinzipiell nicht an eine bestimmte Reihenfolge gebunden, es kann nur aus Gründen der Realisierbarkeit der Verfahren mittels Software- oder Hardwarelösungen einfacher sein, diese Schritte in der angegebenen Reihenfolge vorzunehmen.

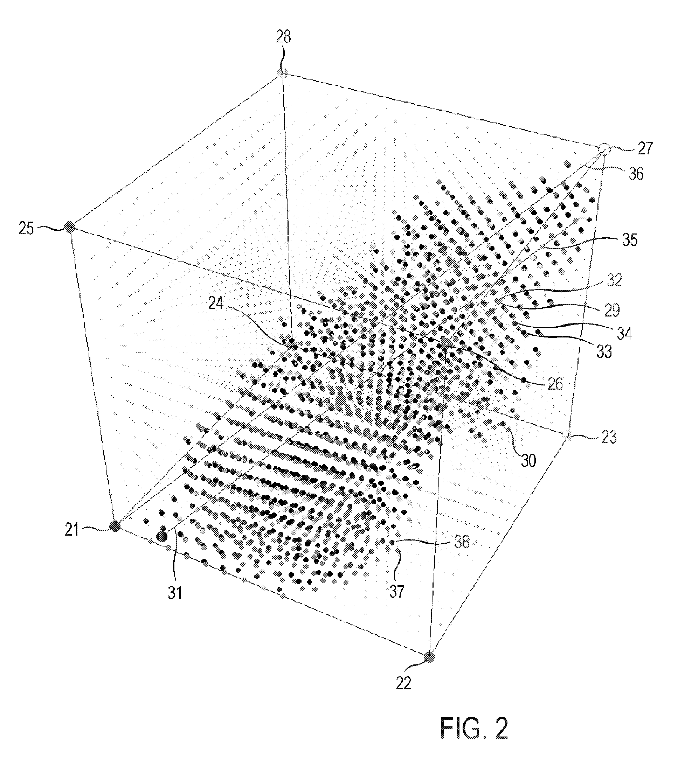

Die folgenden Bildbearbeitungsschritte befassen sich wiederum mit der Verbesserung der Farben in den digitalen Bilddaten. So wird im Bildbearbeitungsschritt 8 eine Farbsättigungsanpassung durchgeführt, welche auf die Chrominanzwerte a und b des Farbsignals wirkt. Nach diesem Bildbearbeitungsschritt wird in einem weiteren Bildbearbeitungsschritt 9 die Rücktransformation aus dem Lab-Farbraum in den RGB-Farbraum vorgenommen. Im RGB-Farbraum wird dann anschließend als letzter, vom Ausgabemedium unabhängiger, Bildbearbeitungsschritt 10 die Hautfarbenkorrektur vorgenommen. Diese erfindungsgemäße Korrektur wird anhand von Fig. 2 näher erläutert. Im letzten Bildbearbeitungsschritt 11 erfolgt schließlich eine Ausgabebearbeitung der digitalen Bilddaten. Hierbei werden die Bilddaten an das gewählte Ausgabemedium angepasst. Soll die Ausgabe beispielsweise auf Fotopapier erfolgen, so werden die bearbeiteten Bilddaten mit einer Papierkennlinie beaufschlagt. Sollen die Bilddaten digital, beipielsweise per Internet, übermittelt werden, so ist es wünschenswert, innerhalb der Ausgabebearbeitung eine Kompression der Bilddaten vorzunehmen. Es kann aber auch beispielsweise eine Anpassung an einen Bildschirm-Farbraum erfolgen, wenn die Bilddaten zur Darstellung an einen solchen vorgesehen sind. Hier können alle bekannten Verfahren eingesetzt werden, welche eine Ausgabe von Bilddaten auf beliebigen Medien vorbereiten.

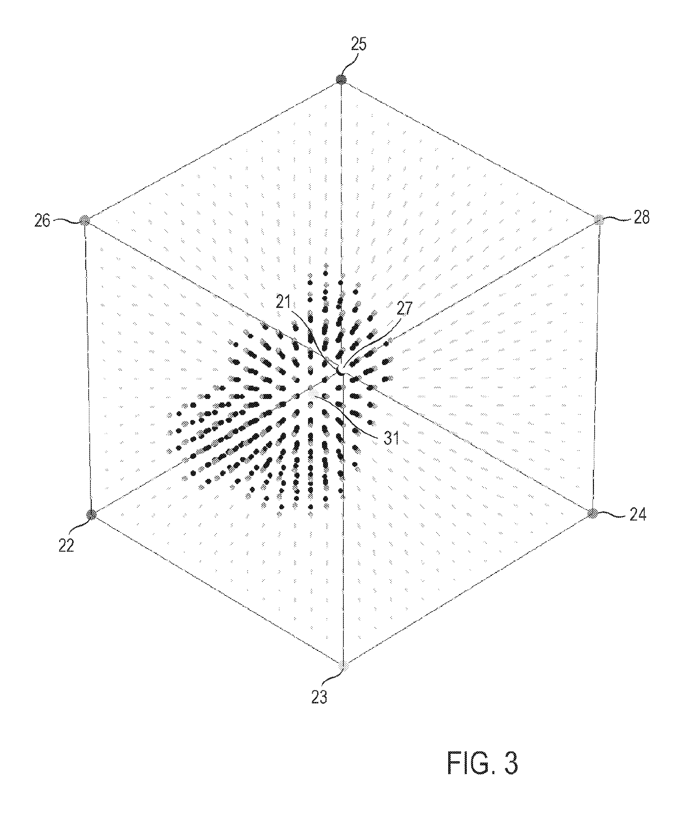

Im Folgenden wird das im Bildbearbeitungsschritt 10 vorgesehene Hautfarbenkorrekturverfahren näher beschrieben. Um die Farbtöne von in den digitalen Bilddaten enthaltenen Hautregionen optimal gestalten zu können, müssen diese Hautregionen in einem Bildanalyseverfahren identifiziert werden. Ohne Einschränkung kann für das erfindungsgemäße Hauttonkorrekturverfahren jede bekannte Methode zur Identifizierung der Hautpunkte angewandt werden. Als besonders vorteilhaft hat sich jedoch eine Methode erwiesen, bei der in den Bilddaten zuerst nach Gebieten gesucht wird, deren Farbwerte in einem als Hauttonbereich ermittelten Farbbereich des RGB-Farbraums liegen. Beispiele hierfür sind in Fig. 2 und Fig. 3 dargestellt. Dieser Farbraum wird üblicherweise als Einheitswürfel dargestellt, wobei an den Würfelecken die Farben schwarz 21, rot 22, gelb 23, grün 24, blau 25, magenta 26, weiß 27 und cyan 28 angeordnet sind. Jede beliebige Farbe lässt sich als Punkt in diesem Farbraum darstellen. Der Farbraum weist hier 16³ Stützstellen auf, die Anzahl ist aber beliebig wählbar. Die Farbpunkte, die zwischen Gitterpunkten liegen, werden mittels Interpolation gewonnen. Fig. 2 zeigt eine Ansicht des Farbraums seitlich auf die Grauachse, Fig. 3 eine Ansicht im Schnitt durch die Hauttongerade. Innerhalb dieses Farbraums sind als größere graue Punkte solche Farbpunkte definiert, welche als zu dem als Hautfarben definierten Gebiet zugehörig sind. Hierbei wird unterschieden, zwischen Punkten, welche die eigentlichen Hautpunkte 29 sind, da sie innerhalb dieses hautfarbenen Bereichs liegen. und Randpunkten 30, welche zwar nicht mehr zum eigentlichen Hautfarbenbereich zugehörig sind, die aber dennoch sehr ähnliche Farbwerte haben, welche gewissermaßen einen Übergang zwischen Hauttönen und anderen Farbbereichen darstellen. Die anhand der Hautfarbzugehörigkeit als Hautpunkte ermittelten Bildpunkte können nun direkt korrigiert werden oder auf ihre tatsächliche Zugehörigkeit zu Hautpartien von Personen untersucht werden. So können beispielsweise Gesichtserkennungsverfahren angewandt werden, anhand derer ermittelt wird, ob einer der als Hautfarben erkannten Bildbereiche die Kriterien der Zugehörigkeit zu einem Gesicht erfüllt. Ist dies der Fall, so wird dieser Hauttonbereich, welcher durch das Gesichtserkennungsverfahren verifiziert werden kann, als tatsächlicher zu korrigierender Hauttonbereich gekennzeichnet. Wie bereits erwähnt, ist es auch möglich, erst Gesichter zu identifizieren und anschließend alle hautfarbigen Bereiche in der Umgebung davon zu kennzeichnen. Anschließend können weitere hautfarbene Gebiete, anhand von Lage und Größe relativ zum Gesicht, als zu einer Person zugehörig ermittelt werden. Die schließlich als hauttonfarbene Gebiete gekennzeichneten Bereiche werden dann der erfindungsgemäßen Korrektur unterzogen. Hierbei werden die Farbwerte dieser Bildpunkte im Farbraum in Richtung einer definierten idealen Hauttongeraden 31 verschoben. Im Rahmen dieser Korrektur wird beispielsweise der Hautpunkt 29 auf den korrigierten Hautpunkt 32 abgebildet. Die korrigierten Hautpunkte sind im Farbraum schwarz dargestellt. Die Korrektur der Hautpunkte erfolgt in Abhängigkeit vom Abstand der Hautpunkte zur Hauttongeraden 31. So wird der Hautpunkt 29 weniger weit im Farbraum verschoben, als beispielsweise der Hautpunkt 33, welcher weiter von der idealen Hauttongerade entfernt liegt und deshalb stärker verschoben, also auf den korrigierten Hautpunkt 34 abgebildet wird. Die Hautpunkte, welche direkt auf der idealen Hauttongerade liegen, wie beispielsweise der Hautpunkt 35, bleiben unverändert. Ebenfalls erhalten bleiben solche Farbpunkte, welche auf der Grauachse 36 liegen. Hierdurch ist gewährleistet, dass neutral-graue Objekte im Bild auch neutral-grau bleiben und nicht farbstichig werden. Auch Farbpunkte, welche sehr nahe an der Grauachse 36 liegen können weniger stark verändert werden, als die anderen Hautpunkte, um damit neutral-grau als solches zu erhalten. Um zu verhindern, dass sich nach der Korrektur Farbsprünge im Bild ergeben, werden Punkte, welche am Rand bzw. in der direkten Umgebung des hautfarbenen Bereichs liegen, wie beispielsweise der Randpunkt 37, ebenfalls in Richtung der idealen Hauttonmenge verschoben, allerdings mit einem geringerem Verschiebungsfaktor, um einen Übergang zu gewährleisten. So wird beispielsweise der Randpunkt 37 auf den korrigierten Farbpunkt 38 abgebildet. Die Verschiebung der zu korrigierenden Punkte erfolgt jeweils in einer Ebene senkrecht zur Grauachse, wodurch gewährleistet wird, dass die Helligkeit des jeweiligen Hautpunkts unverändert bleibt. Die Hauttongerade wird konstruiert als parallel zur Grauachse verlaufende Schwerpunktgerade, durch manuell ermittelte, vom Betrachter als ideal empfundene, Hauttöne in einem großen Beispielsatz von Bildern mit Personenaufnahmen. Es ist bei diesem Verfahren möglich, mehrere ideale Hauttongeraden zu bilden, welche sich beispielsweise durch unterschiedliche Geschmacksrichtungen von verschiedenen Kulturkreisen ergeben. Je nach dem, welcher Benutzer anschließend das Korrekturverfahren anwendet, kann sich dieser, die zu seinem Geschmack passende ideale Hauttongerade aussuchen. Es kann aber auch eine für seinen Landesgeschmack übliche Hauttongerade vorgeschlagen werden.

## Patentansprüche

1. Verfahren zum automatischen Korrigieren von Hautfarben in digitalen Bilddaten, wobei Bildpunkte von Hautpartien in Bildern als Hautpunkte identifiziert, und der Farbton der Hautpunkte verändert wird, **dadurch gekennzeichnet, dass** der Farbton der Hautpunkte im Farbraum in Richtung einer vorbestimmten, zusammenhängenden, idealen Hautfarbmenge abgebildet wird.

2. Verfahren nach Anspruch 1, **dadurch gekennzeichnet, dass** die Abbildung als Verschiebung umgekehrt proportional zum Abstand des Farbtons von der idealen Hautfarbmenge erfolgt.

3. Verfahren nach Anspruch 1 oder 2, **dadurch gekennzeichnet, dass** Farbtöne auf und/oder nahe einer vorbestimmten Grauachse festgehalten werden.

4. Verfahren nach Anspruch 1, **dadurch gekennzeichnet, dass** die Identifizierung von Hautpunkten durch Vergleich deren Farbtons mit vorbestimmten Hauttonfarben erfolgt.

5. Verfahren nach Anspruch 4, **dadurch gekennzeichnet, dass** die als Hautpunkte identifizierten Bildpunkte durch Gesichtserkennungsverfahren verifiziert werden.

6. Verfahren nach einem der vorhergehenden Ansprüche, **dadurch gekennzeichnet, dass** Farbtöne von Bildpunkten, deren Farbtöne nahe der Farbtöne der Hauptpunkte liegen, ebenfalls in Richtung der idealen Hautfarbmenge abgebildet werden, wobei die Veränderung geringer als bei den Hautpunkten ist.

7. Verfahren nach einem der vorhergehenden Ansprüche, **dadurch gekennzeichnet, dass** die Abbildung der Farbtöne im Farbraum in einer Ebene senkrecht zur Grauachse erfolgt.

8. Verfahren nach einem der vorhergehenden Ansprüche, **dadurch gekennzeichnet, dass** das Verfahren zum Korrigieren von Hautfarben auf die Bilddaten nach der Gradationskorrektur angewandt wird.

9. Verfahren nach Anspruch 8, **dadurch gekennzeichnet, dass** die Korrektur von Hautfarben als letzter Korrekturschritt vor der Farbtransformation in den Farbraum für die Ausgabe der Bilddaten erfolgt.

10. Verfahren nach Anspruch 1, **dadurch gekennzeichnet, dass** die ideale Hautfarbmenge eine Hauttongerade im Farbraum darstellt.

11. Verfahren nach Anspruch 10, **dadurch gekennzeichnet, dass** die Hauttongerade parallel zur Grauachse verläuft.

12. Verfahren nach einem der vorhergehenden Ansprüche, **dadurch gekennzeichnet, dass** mehrere unterschiedliche Hautfarbmengen für verschiedene Geschmacksrichtungen definiert werden.
